# EUROPEAN PATENT APPLICATION

(11) **EP 4 064 777 A1**
(43) Date of publication of application: **28.09.2022**
(21) Application number: 22161014.0
(22) Date of filing: 09.03.2022
(51) Int. Cl.: H04W 72/04, H04W 72/08, H04W 72/10, H04W 72/12

(54) **ALLOCATING RADIO RESOURCES BASED ON USER MODE**

(30) Priority: 23.03.2021 FI 20215324
(71) Applicant: Nokia Solutions and Networks Oy, 02610 Espoo (FI)
(72) Inventor: ZHOU, Liang, Espoo (FI); PARTS, Ülo, Helsinki (FI); KHOSRAVIRAD, Saeed Reza, Mountainside (US); BARACCA, Paolo, Stuttgart (DE); KORPI, Dani Johannes, Helsinki (FI); UUSITALO, Mikko Aleksi, Helsinki (FI); TIRKKONEN, Olav Emerik, Helsinki (FI)
(74) Representative: Nokia EPO representatives

(57) **Abstract**

Disclosed is a method comprising obtaining information indicating at least a mode of a plurality of terminal devices, and allocating a set of radio resources to the plurality of terminal devices based at least partly on the mode of the plurality of terminal devices.

## Description

### FIELD

The following exemplary embodiments relate to wireless communication.

### BACKGROUND

As resources are limited, it is desirable to optimize the usage of network resources. A cell in a cellular communication network may be utilized to allocate resources to terminal devices such that better service may be provided for communicating with the terminal devices.

### SUMMARY

The scope of protection sought for various exemplary embodiments is set out by the independent claims. The exemplary embodiments and features, if any, described in this specification that do not fall under the scope of the independent claims are to be interpreted as examples useful for understanding various exemplary embodiments.

According to an aspect, there is provided an apparatus comprising at least one processor, and at least one memory including computer program code, wherein the at least one memory and the computer program code are configured, with the at least one processor, to cause the apparatus to: obtain information indicating at least a mode of a plurality of terminal devices; and allocate a set of radio resources to the plurality of terminal devices based at least partly on the mode of the plurality of terminal devices.

According to another aspect, there is provided an apparatus comprising means for: obtaining information indicating at least a mode of a plurality of terminal devices; and allocating a set of radio resources to the plurality of terminal devices based at least partly on the mode of the plurality of terminal devices.

According to another aspect, there is provided a method comprising obtaining information indicating at least a mode of a plurality of terminal devices; and allocating a set of radio resources to the plurality of terminal devices based at least partly on the mode of the plurality of terminal devices.

According to another aspect, there is provided a computer program comprising instructions for causing an apparatus to perform at least the following: obtain information indicating at least a mode of a plurality of terminal devices; and allocate a set of radio resources to the plurality of terminal devices based at least partly on the mode of the plurality of terminal devices.

According to another aspect, there is provided a computer readable medium comprising program instructions for causing an apparatus to perform at least the following: obtain information indicating at least a mode of a plurality of terminal devices; and allocate a set of radio resources to the plurality of terminal devices based at least partly on the mode of the plurality of terminal devices.

According to another aspect, there is provided a non-transitory computer readable medium comprising program instructions for causing an apparatus to perform at least the following: obtain information indicating at least a mode of a plurality of terminal devices; and allocate a set of radio resources to the plurality of terminal devices based at least partly on the mode of the plurality of terminal devices.

According to another aspect, there is provided an apparatus comprised in a terminal device, said apparatus comprising at least one processor, and at least one memory including computer program code, wherein the at least one memory and the computer program code are configured, with the at least one processor, to cause the apparatus to: transmit, to a base station, a request to be unallocated radio resources for a first time period, wherein the request is transmitted based at least partly on an application layer of the terminal device and/or a channel quality indicator associated with the terminal device.

According to another aspect, there is provided an apparatus comprised in a terminal device, said apparatus comprising means for transmitting, to a base station, a request to be unallocated radio resources for a first time period, wherein the request is transmitted based at least partly on an application layer of the terminal device and/or a channel quality indicator associated with the terminal device.

According to another aspect, there is provided a method comprising transmitting, to a base station, a request to be unallocated radio resources for a first time period, wherein the request is transmitted based at least partly on an application layer of the terminal device and/or a channel quality indicator associated with the terminal device.

According to another aspect, there is provided a computer program comprising instructions for causing an apparatus to perform at least the following: transmit, to a base station, a request to be unallocated radio resources for a first time period, wherein the request is transmitted based at least partly on an application layer of the terminal device and/or a channel quality indicator associated with the terminal device.

According to another aspect, there is provided a computer readable medium comprising program instructions for causing an apparatus to perform at least the following: transmit, to a base station, a request to be unallocated radio resources for a first time period, wherein the request is transmitted based at least partly on an application layer of the terminal device and/or a channel quality indicator associated with the terminal device.

According to another aspect, there is provided a non-transitory computer readable medium comprising program instructions for causing an apparatus to perform at least the following: transmit, to a base station, a request to be unallocated radio resources for a first time period, wherein the request is transmitted based at least partly on an application layer of the terminal device and/or a channel quality indicator associated with the terminal device.

According to another aspect, there is provided a system comprising at least a base station and a plurality of terminal devices. The base station is configured to: obtain, from the plurality of terminal devices, information indicating at least a mode of the plurality of terminal devices; and allocate a set of radio resources to the plurality of terminal devices based at least partly on the mode of the plurality of terminal devices.

According to another aspect, there is provided a system comprising at least a base station and a plurality of terminal devices. The base station comprises means for: obtaining, from the plurality of terminal devices, information indicating at least a mode of the plurality of terminal devices; and allocating a set of radio resources to the plurality of terminal devices based at least partly on the mode of the plurality of terminal devices.

### BRIEF DESCRIPTION OF THE DRAWINGS

In the following, various exemplary embodiments will be described in greater detail with reference to the accompanying drawings, in which
FIG. 1 illustrates an exemplary embodiment of a cellular communication network;
FIG. 2 illustrates the concept of survival time according to an exemplary scheme;
FIGS. 3-7 illustrate flow charts according to some exemplary embodiments;
FIG. 8 illustrates simulated measurement results according to an exemplary embodiment;
FIGS. 9-10 illustrate apparatuses according to some exemplary embodiments.

### DETAILED DESCRIPTION

The following embodiments are exemplifying. Although the specification may refer to "an", "one", or "some" embodiment(s) in several locations of the text, this does not necessarily mean that each reference is made to the same embodiment(s), or that a particular feature only applies to a single embodiment. Single features of different embodiments may also be combined to provide other embodiments.

In the following, different exemplary embodiments will be described using, as an example of an access architecture to which the exemplary embodiments may be applied, a radio access architecture based on long term evolution advanced (LTE Advanced, LTE-A) or new radio (NR, 5G), without restricting the exemplary embodiments to such an architecture, however. It is obvious for a person skilled in the art that the exemplary embodiments may also be applied to other kinds of communications networks having suitable means by adjusting parameters and procedures appropriately. Some examples of other options for suitable systems may be the universal mobile telecommunications system (UMTS) radio access network (UTRAN or E-UTRAN), long term evolution (LTE, substantially the same as E-UTRA), wireless local area network (WLAN or Wi-Fi), worldwide interoperability for microwave access (WiMAX), Bluetooth^{®}, personal communications services (PCS), ZigBee^{®}, wideband code division multiple access (WCDMA), systems using ultra-wideband (UWB) technology, sensor networks, mobile ad-hoc networks (MANETs) and Internet Protocol multimedia subsystems (IMS) or any combination thereof.

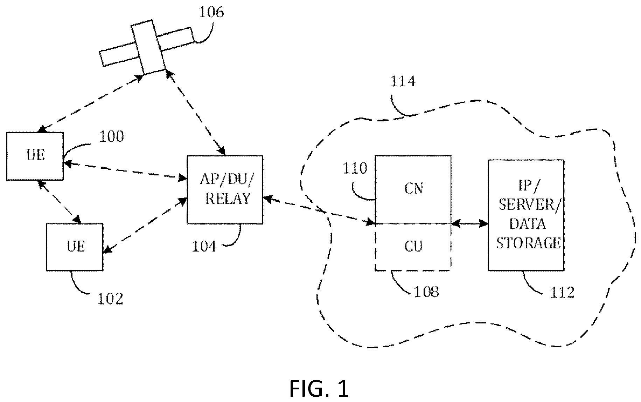

FIG. 1 depicts examples of simplified system architectures showing some elements and functional entities, all being logical units, whose implementation may differ from what is shown. The connections shown in FIG. 1 are logical connections; the actual physical connections may be different. It is apparent to a person skilled in the art that the system may also comprise other functions and structures than those shown in FIG. 1.

The exemplary embodiments are not, however, restricted to the system given as an example but a person skilled in the art may apply the solution to other communication systems provided with necessary properties.

The example of FIG. 1 shows a part of an exemplifying radio access network.

FIG. 1 shows user devices 100 and 102 configured to be in a wireless connection on one or more communication channels in a cell with an access node (such as (e/g)NodeB) 104 providing the cell. The physical link from a user device to a (e/g)NodeB may be called uplink or reverse link and the physical link from the (e/g)NodeB to the user device may be called downlink or forward link. It should be appreciated that (e/g)NodeBs or their functionalities may be implemented by using any node, host, server or access point etc. entity suitable for such a usage.

A communication system may comprise more than one (e/g)NodeB, in which case the (e/g)NodeBs may also be configured to communicate with one another over links, wired or wireless, designed for the purpose. These links may be used for signaling purposes. The (e/g)NodeB may be a computing device configured to control the radio resources of communication system it is coupled to. The NodeB may also be referred to as a base station, an access point or any other type of interfacing device including a relay station capable of operating in a wireless environment. The (e/g)NodeB may include or be coupled to transceivers. From the transceivers of the (e/g)NodeB, a connection may be provided to an antenna unit that establishes bi-directional radio links to user devices. The antenna unit may comprise a plurality of antennas or antenna elements. The (e/g)NodeB may further be connected to core network 110 (CN or next generation core NGC). Depending on the system, the counterpart on the CN side may be a serving gateway (S-GW, routing and forwarding user data packets), packet data network gateway (P-GW), for providing connectivity of user devices (UEs) to external packet data networks, or mobile management entity (MME), etc.

The user device (also called UE, user equipment, user terminal, terminal device, etc.) illustrates one type of an apparatus to which resources on the air interface may be allocated and assigned, and thus any feature described herein with a user device may be implemented with a corresponding apparatus, such as a relay node. An example of such a relay node may be a layer 3 relay (self-backhauling relay) towards the base station.

The user device may refer to a portable computing device that includes wireless mobile communication devices operating with or without a subscriber identification module (SIM), including, but not limited to, the following types of devices: a mobile station (mobile phone), smartphone, personal digital assistant (PDA), handset, device using a wireless modem (alarm or measurement device, etc.), laptop and/or touch screen computer, tablet, game console, notebook, and multimedia device. It should be appreciated that a user device may also be a nearly exclusive uplink only device, of which an example may be a camera or video camera loading images or video clips to a network. A user device may also be a device having capability to operate in Internet of Things (IoT) network which is a scenario in which objects may be provided with the ability to transfer data over a network without requiring human-to-human or human-to-computer interaction. The user device may also utilize cloud. In some applications, a user device may comprise a small portable device with radio parts (such as a watch, earphones or eyeglasses) and the computation may be carried out in the cloud. The user device (or in some exemplary embodiments a layer 3 relay node) may be configured to perform one or more of user equipment functionalities. The user device may also be called a subscriber unit, mobile station, remote terminal, access terminal, user terminal, terminal device, or user equipment (UE) just to mention but a few names or apparatuses.

Various techniques described herein may also be applied to a cyber-physical system (CPS) (a system of collaborating computational elements controlling physical entities). CPS may enable the implementation and exploitation of massive amounts of interconnected ICT devices (sensors, actuators, processors microcontrollers, etc.) embedded in physical objects at different locations. Mobile cyber physical systems, in which the physical system in question may have inherent mobility, are a subcategory of cyber-physical systems. Examples of mobile physical systems include mobile robotics and electronics transported by humans or animals.

Additionally, although the apparatuses have been depicted as single entities, different units, processors and/or memory units (not all shown in FIG. 1) may be implemented.

5G may enable using multiple input - multiple output (MIMO) antennas, many more base stations or nodes than the LTE (a so-called small cell concept), including macro sites operating in co-operation with smaller stations and employing a variety of radio technologies depending on service needs, use cases and/or spectrum available. 5G mobile communications may support a wide range of use cases and related applications including video streaming, augmented reality, different ways of data sharing and various forms of machine type applications (such as (massive) machine-type communications (mMTC), including vehicular safety, different sensors and real-time control. 5G may be expected to have multiple radio interfaces, namely below 6GHz, cmWave and mmWave, and also being integrable with existing legacy radio access technologies, such as the LTE. Integration with the LTE may be implemented, at least in the early phase, as a system, where macro coverage may be provided by the LTE, and 5G radio interface access may come from small cells by aggregation to the LTE. In other words, 5G may support both inter-RAT operability (such as LTE-5G) and inter-RI operability (inter-radio interface operability, such as below 6GHz - cmWave, below 6GHz - cmWave - mmWave). One of the concepts considered to be used in 5G networks may be network slicing in which multiple independent and dedicated virtual sub-networks (network instances) may be created within the substantially same infrastructure to run services that have different requirements on latency, reliability, throughput and mobility.

The current architecture in LTE networks may be fully distributed in the radio and fully centralized in the core network. The low latency applications and services in 5G may need to bring the content close to the radio which leads to local break out and multi-access edge computing (MEC). 5G may enable analytics and knowledge generation to occur at the source of the data. This approach may need leveraging resources that may not be continuously connected to a network such as laptops, smartphones, tablets and sensors. MEC may provide a distributed computing environment for application and service hosting. It may also have the ability to store and process content in close proximity to cellular subscribers for faster response time. Edge computing may cover a wide range of technologies such as wireless sensor networks, mobile data acquisition, mobile signature analysis, cooperative distributed peer-to-peer ad hoc networking and processing also classifiable as local cloud/fog computing and grid/mesh computing, dew computing, mobile edge computing, cloudlet, distributed data storage and retrieval, autonomic self-healing networks, remote cloud services, augmented and virtual reality, data caching, Internet of Things (massive connectivity and/or latency critical), critical communications (autonomous vehicles, traffic safety, real-time analytics, time-critical control, healthcare applications).

The communication system may also be able to communicate with other networks, such as a public switched telephone network or the Internet 112, or utilize services provided by them. The communication network may also be able to support the usage of cloud services, for example at least part of core network operations may be carried out as a cloud service (this is depicted in FIG. 1 by "cloud" 114). The communication system may also comprise a central control entity, or a like, providing facilities for networks of different operators to cooperate for example in spectrum sharing.

Edge cloud may be brought into radio access network (RAN) by utilizing network function virtualization (NFV) and software defined networking (SDN). Using edge cloud may mean access node operations to be carried out, at least partly, in a server, host or node operationally coupled to a remote radio head or a radio unit (RU), or a base station comprising radio parts. It may also be possible that node operations will be distributed among a plurality of servers, nodes or hosts. Carrying out the RAN real-time functions at the RAN side (in a distributed unit, DU 104) and non-real time functions in a centralized manner (in a centralized unit, CU 108) may be enabled for example by application of cloudRAN architecture.

It should also be understood that the distribution of labour between core network operations and base station operations may differ from that of the LTE or even be non-existent. Some other technology advancements that may be used may be Big Data and all-IP, which may change the way networks are being constructed and managed. 5G (or new radio, NR) networks may be designed to support multiple hierarchies, where MEC servers may be placed between the core and the base station or nodeB (gNB). It should be appreciated that MEC may be applied in 4G networks as well.

5G may also utilize satellite communication to enhance or complement the coverage of 5G service, for example by providing backhauling. Possible use cases may be providing service continuity for machine-to-machine (M2M) or Internet of Things (IoT) devices or for passengers on board of vehicles, or ensuring service availability for critical communications, and future railway/maritime/aeronautical communications. Satellite communication may utilize geostationary earth orbit (GEO) satellite systems, but also low earth orbit (LEO) satellite systems, in particular mega-constellations (systems in which hundreds of (nano)satellites are deployed). At least one satellite 106 in the mega-constellation may cover several satellite-enabled network entities that create on-ground cells. The on-ground cells may be created through an on-ground relay node 104 or by a gNB located on-ground or in a satellite.

It is obvious for a person skilled in the art that the depicted system is only an example of a part of a radio access system and in practice, the system may comprise a plurality of (e/g)NodeBs, the user device may have an access to a plurality of radio cells and the system may also comprise other apparatuses, such as physical layer relay nodes or other network elements, etc. At least one of the (e/g)NodeBs or may be a Home(e/g)nodeB.

Furthermore, the (e/g)nodeB or base station may also be split into: a radio unit (RU) comprising a radio transceiver (TRX), i.e. a transmitter (TX) and a receiver (RX); a distributed unit (DU) that may be used for the so-called Layer 1 (L1) processing and real-time Layer 2 (L2) processing; and a centralized unit (CU) or a central unit that may be used for non-real-time L2 and Layer 3 (L3) processing. Such a split may enable the centralization of CUs relative to the cell sites and DUs, whereas DUs may be more distributed and may even remain at cell sites. The CU and DU together may also be referred to as baseband or a baseband unit (BBU). The RU and DU may also be comprised into a radio access point (RAP). Cloud computing platforms may also be used to run the CU or DU. The CU may run in a cloud computing platform (vCU, virtualized CU). In addition to the vCU, there may also be a virtualized DU (vDU) running in a cloud computing platform. Furthermore, there may also be a combination, where the DU may use so-called bare metal solutions, for example application-specific integrated circuit (ASIC) or customer-specific standard product (CSSP) system-on-a-chip (SoC) solutions. It should also be understood that the distribution of labour between the above-mentioned base station units, or different core network operations and base station operations, may differ.

Additionally, in a geographical area of a radio communication system, a plurality of different kinds of radio cells as well as a plurality of radio cells may be provided. Radio cells may be macro cells (or umbrella cells) which may be large cells having a diameter of up to tens of kilometers, or smaller cells such as micro-, femto- or picocells. The (e/g)NodeBs of FIG. 1 may provide any kind of these cells. A cellular radio system may be implemented as a multilayer network including several kinds of cells. In multilayer networks, one access node may provide one kind of a cell or cells, and thus a plurality of (e/g)NodeBs may be needed to provide such a network structure.

For fulfilling the need for improving the deployment and performance of communication systems, the concept of "plug-and-play" (e/g)NodeBs may be introduced. A network which may be able to use "plug-and-play" (e/g)Node Bs, may include, in addition to Home (e/g)NodeBs (H(e/g)nodeBs), a home node B gateway, or HNB-GW (not shown in FIG. 1). A HNB Gateway (HNB-GW), which may be installed within an operator's network, may aggregate traffic from a large number of HNBs back to a core network.

Ultra-reliable low-latency communication (URLLC) is a 5G communication service that provides low latency and high reliability for latency-sensitive applications, such as factory automation, the industrial internet of things (IIoT), and autonomous driving. The quality of service (QoS) requirements for cyber physical applications, such as industrial motion control, transit control, and process automation, may comprise requirements such as survival time, service availability, service reliability, and transfer interval.

Survival time may be defined as the time that an application consuming a communication service may continue without an anticipated message. In other words, survival time may be defined as the time period that is tolerated by the control application without communication service. Survival time may be expressed as a time period or, for example in the case of cyclic traffic, as the maximum number of consecutive incorrectly received or lost messages. With regard to service availability, the system may be considered as unavailable to the cyber physical application, when an expected message is not received by the application after the application's survival time expires, for example if the transfer time is larger than the maximum transfer latency. Service reliability states the mean value of how long the communication service is available before it becomes unavailable. Transfer interval may be defined as the time difference between two consecutive transfers of application data from an application via the service interface to the communication system.

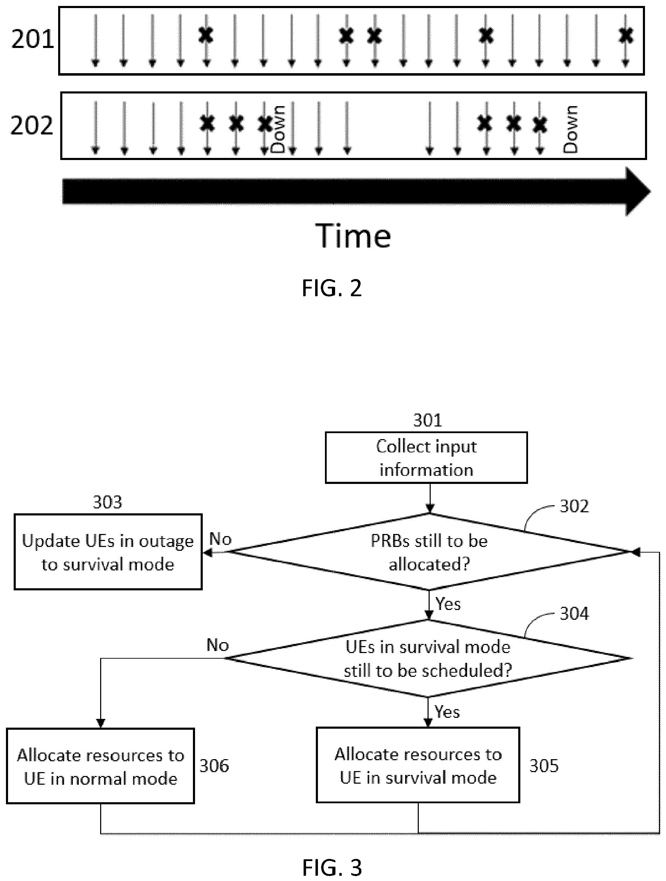

FIG. 2 illustrates the concept of survival time and the tolerance of packet loss within survival time requirements with cyclic traffic. In FIG. 2, an exemplary packet flow is provided, where the survival time is equal to three consecutive packet errors. In the first example illustrated in block 201, since fewer than three consecutive packet errors are experienced, the service stays in the up state. In other words, one or two errors can be tolerated by the service. However, in the second example illustrated in block 202, when the service experiences three consecutive packet errors, the service enters the down state, which may result in production being stopped, for example. It is noted that, in this example, survival time is based on consecutive packet errors. Nevertheless, other means for defining the survival time can also be utilized, for example in terms of absolute time.

For some cyber physical applications, communication may be required to stay alive for 1-10 years. For example, in motion control applications, a communication reliability (i.e. a mean time between failures) of approximately 10 years may be required along with an end-to-end latency as low as 0.5 ms, and a service availability of 10⁻⁵ (i.e. 99,999 % of packages need to be delivered) to 10⁻⁹ (i.e. 99,9999999 % of packages need to be delivered). Communication for cyber physical applications may also require efficient use of network and radio resources in addition to a highly reliable radio access.

Table 1 below depicts an example of service requirements for motion control. In Table 1, latency and reliability may be seen as the most stringent requirements for motion control applications. The service availability values in Table 1 imply that the communication service must be re-established with approximately 100 % guarantee after being unavailable for one survival time. Therefore, communication for cyber physical systems, such as wireless motion control applications, may require a highly reliable radio access, as well as smart, agile, and efficient planning of the network and radio resources in order to provide approximately 100 % service availability.

**Table 1.**

| Service availability | Service reliability | End-to-end latency | Message size [byte] | Transfer interval (TI) | Survival time | UE speed | # of UEs | Service area |
|---|---|---|---|---|---|---|---|---|
| 99.999% to 99.99999% | ~10 years | < TI | 50 | 500 µs | 500 µs | ≤ 75 km/h | ≤ 20 | 50m x 10m x 10m |
| 99.9999% to 99.999999% | ~10 years | < TI | 40 | 1 ms | 1 ms | ≤ 75 km/h | ≤ 50 | 50m x 10m x 10m |
| 99.9999% to 99.999999% | ~10 years | < TI | 20 | 2 ms | 2 ms | ≤ 75 km/h | ≤ 100 | 50m x 10m x 10m |

The stringent reliability requirements of cyber physical applications may result in highly conservative transmission attributes, such as modulation and coding scheme (MCS), transmit power, and repetitions, which may drain the resources of the network. In the presence of service availability requirements such as the ones depicted in Table 1, this may become even more demanding on the network's resources, and substantially reduce the efficiency of the system. However, this issue can be addressed by smart design and planning of link adaptation and resource scheduling, as well as by leveraging the fact that a single packet error may be tolerated in cyber physical applications, while multiple consecutive errors may lead to failure at the application level and cause the system to enter an emergency mode. As an example, losing an individual packet may reduce the quality of experience (QoE) of a motion control system slightly, for example the motion accuracy of a robotic arm may be reduced, while losing two or three consecutive packets may trigger a safety mode which stops the robot(s) completely.

Survival mode refers to a mode, in which the last packet has been lost and the survival time counter has been triggered. In other words, during survival mode, the network is more concerned about the link. In survival mode, reliability requirements may be increased, whereas in normal mode the reliability requirements may be more relaxed compared to the survival mode. If a UE is in survival mode, the network can detect the survival mode by means of a feedback channel, which the UE may use to send feedback, such as a negative acknowledgement (NACK), to the network in order to indicate that the previous packet has failed.

Some exemplary embodiments may be used to prioritize UEs for resource allocation in the scheduler of a base station in order to not schedule some UEs that are in normal mode and to give more resources to UEs that are in survival mode, thus decreasing the number of consecutive errors and improving the communication service availability. Some exemplary embodiments may be applied, for example, to wireless communication for cyber physical applications, such as communication for motion control in time-sensitive networking. However, some exemplary embodiments may be applied to ultra-reliable communication in other contexts as well. Some exemplary embodiments may be based on the QoS requirements for cyber physical applications, such as survival time and service availability.

FIG. 3 illustrates a flow chart according to an exemplary embodiment. The functions illustrated in FIG. 3 may be performed by an apparatus such as a scheduler comprised in a base station.

Referring to FIG. 3, input information from UE feedback and past scheduling decisions is collected 301, or obtained, from a plurality of UEs. The collected input information may comprise, for example, a channel quality indicator (CQI) for each physical resource block (PRB) for each UE, and/or information on the mode of each UE, i.e. an indicator on whether each UE is in normal mode or survival mode. CQI describes the channel strength (i.e. what spectral efficiency is achievable) for each UE. One possibility is to calculate the average of the CQIs over PRBs. CQI is based on the signal-to-interference-plus-noise (SINR) measurements performed by the UE. SINR may be expressed for example in decibels (dB). SINR may be reported for each PRB of each UE. A transmission at time instant *tₙ* may be based on measurements earlier in time at *t*_{*n*-1}, or it may be a calculated result from measurements earlier in time. The actual channel at *tₙ* may be better or worse in quality compared to the estimated one.

Herein normal mode refers to a mode, in which the UE has received the previous packet successfully. Survival mode refers to a mode, in which the UE has failed to receive the previous packet. As noted earlier, two or more consecutive errors may be prohibited in some systems.

If there are no PRBs left to be allocated (302: no), then the mode of one or more UEs in outage is updated 303 to survival mode.

If there are still one or more PRBs to be allocated (302: yes), and there are still one or more UEs in survival mode to be scheduled (304: yes), then resources are allocated 305 to a UE in survival mode not yet scheduled and with the lowest CQI. In other words, the UEs that are in survival mode are allocated first before UEs that are in normal mode. In case there are multiple UEs in survival mode, the order of UEs may be defined such that UEs with a weaker channel, i.e. lower CQI, are allocated first. The scheduler should take into account that the amount of PRBs allocated to the survival mode UEs is sufficient considering also the change of the channel from the moment of the CQI measurement. After allocating resources to one UE, the average of CQI of available PRBs may be recalculated, as it may define a different allocation order of the remaining UEs. After block 305, the process returns to block 302 and continues from there.

If more than one consecutive packet failures are allowed, then the scheduler may prioritize the survival mode UEs in block 305 based at least partly on the time left in survival mode. Among UEs in survival mode not yet scheduled, the priority may be set first based on the remaining survival time (i.e. survival mode UEs with the least amount of remaining survival time are prioritized first), and secondly based on the CQI (i.e. among survival mode UEs with the same amount of survival time remaining, the one with lower CQI is prioritized first). For example, if there are two UEs in survival mode with two consecutive errors allowed, wherein the first UE has experienced one failed packet (i.e. one packet transfer interval left in survival mode), and the second UE has experienced two consecutive failed packets (i.e. 0 packet transfer intervals left in survival mode), then in this case the second UE may be prioritized over the first UE. Therefore, the scheduler may first allocate resources for the UE(s), which have 0 packet transfer intervals left in their survival mode. Next, the scheduler may allocate resources for the UE(s) with one packet transfer interval left in their survival mode, if there are resources left from the previous round. The scheduler may then continue allocating resources until all users in survival mode are scheduled, or until there are no more resources left to be allocated.

If there are still one or more PRBs to be allocated (302: yes), and there are no more UEs in survival mode to be scheduled (304: no), then resources are allocated 306 to a UE in normal mode not yet scheduled and with the lowest CQI. The order of UEs may be defined by the average CQI of available PRBs. After allocating resources to one UE, the average of CQI of available PRBs may be recalculated, as it may define a different order of allocation. As a result, the scheduler may not always attempt to serve all UEs, as UEs with the strongest channel may be in the outage, i.e. a sufficient number of PRBs may not be allocated to them. However, the influence on the service availability performance may not be influenced by that decision, because these UEs are less likely to experience packet failures, once sufficient resources are allocated. After block 306, the process returns to block 302 and continues from there.

For schedulers with time domain and frequency domain scheduling entities, the above exemplary embodiment may require the scheduler to go back and forth between time domain and frequency domain schedulers, when iterating over block 305. In this case, the input information collected in block 301 may further comprise information on how many packet transfer intervals are left for each UE, i.e. how much survival time is left for each UE, if two or more consecutive packet errors are allowed. In block 305, the scheduler may then allocate resources to the survival mode UE not yet scheduled and with the lowest amount of remaining survival time and with the lowest CQI. Among UEs in survival mode not yet scheduled, the priority may be set first based on the remaining survival time (i.e. survival mode UEs with the least amount of remaining survival time are prioritized first), and secondly based on the CQI (i.e. among survival mode UEs with the same amount of survival time remaining, the one with lower CQI is prioritized first). For example, first UEs with 0 packet transfer intervals left in their survival mode may be selected in the time domain scheduling entity, and moved to the frequency domain scheduler. If there are still resources left out of the total PRBs, then in the next iteration of block 305 the scheduler may run the time domain scheduling to select the UE(s) with one packet transfer interval left in their survival mode. Those UE(s) may then be scheduled for using the frequency domain scheduler. This process may be performed iteratively until all UEs in survival mode are scheduled, or until there are no more resources left to be allocated.

Some exemplary embodiments may be applied for example to the situation, when serving all users demands the usage of high MCSs for the current realization of the channel. In this situation, many UEs may fail in reception as the channel is becoming worse in quality for the moment of transmission. According to some exemplary embodiments, some UEs with a higher CQI may be de-prioritized for the benefit of UEs with a lower CQI.

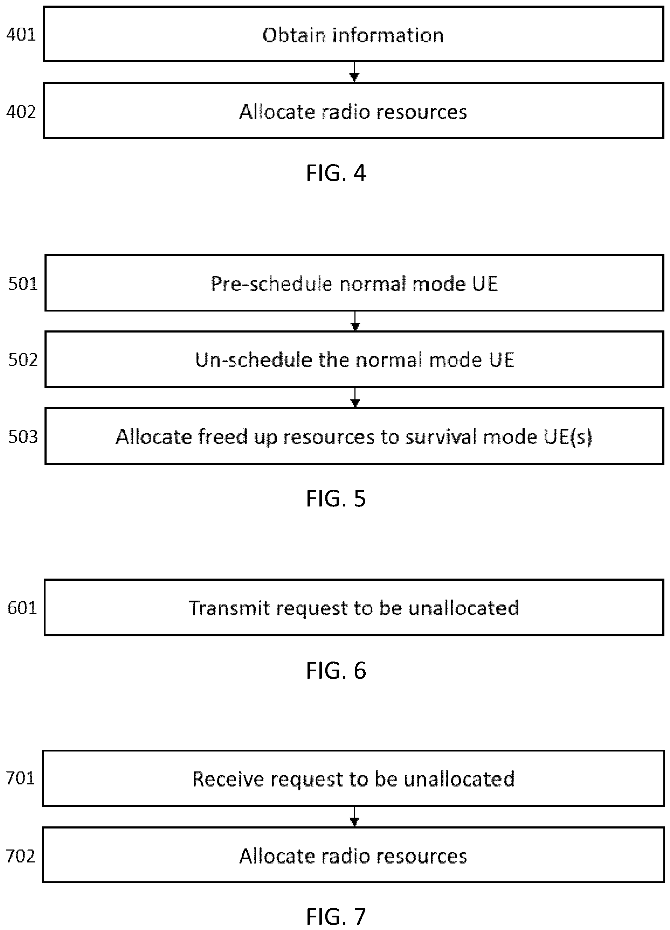

FIG. 4 illustrates a flow chart according to another exemplary embodiment. The functions illustrated in FIG. 4 may be performed by an apparatus such as a scheduler comprised in a base station. Referring to FIG. 4, information indicating at least a mode of a plurality of UEs is obtained 401. The mode of the plurality of UEs may also be referred to as a user mode herein. For example, a first subset of the plurality of UEs may be in a survival mode, and a second subset of the plurality of UEs may be in a normal mode. The obtained information may further indicate a CQI associated with the plurality of UEs, and/or the remaining amount of survival time associated with at least the first subset of UEs in survival mode. A set of radio resources is allocated 402 to the plurality of UEs based at least partly on the mode of the plurality of UEs. The set of radio resources may be allocated to the plurality of UEs based further, at least partly, on the CQI associated with the plurality of UEs and/or the remaining amount of survival time associated with the at least first subset of UEs in survival mode. The set of radio resources may be allocated to the plurality of UEs for example via a physical downlink control channel (PDCCH). The set of radio resources may comprise, for example, time and/or frequency resources.

For example, the set of radio resources may be allocated to prioritize survival mode UEs over normal mode UEs. In other words, a first subset of radio resources from the set of radio resources may be allocated to a first UE in the survival mode before allocating a second subset of radio resources from the set of radio resources to a second UE in the normal mode. As a result, some normal mode UEs may be in the outage of resources and not scheduled.

The survival mode UEs may be allocated resources by prioritizing survival mode UEs with lower CQI over survival mode UEs with higher CQI. In other words, a first subset of radio resources from the set of radio resources may be allocated to a first UE in the survival mode before allocating a third subset of radio resources from the set of radio resources to a third UE in the survival mode, wherein the first UE in the survival mode is associated with a lower CQI than the third UE in the survival mode. Furthermore, the survival mode UEs may be allocated by prioritizing survival mode UEs with the least amount of survival time left. In other words, the first UE in the survival mode may be associated with an equal or lower amount of remaining survival time than the third UE in the survival mode.

After the survival mode UEs are scheduled, the normal mode UEs may be allocated resources by prioritizing normal mode UEs with lower CQI over normal mode UEs with higher CQI. In other words, a second subset of radio resources from the set of radio resources may be allocated to a second UE in the normal mode before allocating a fourth subset of radio resources from the set of radio resources to the fourth UE in the normal mode, wherein the second UE in the normal mode is associated with a lower CQI than the fourth UE in the normal mode. As a result, some normal mode UEs with a higher CQI may be de-prioritized and remain in the outage of resources.

FIG. 5 illustrates a flow chart according to another exemplary embodiment. The functions illustrated in FIG. 5 may be performed by an apparatus such as a scheduler comprised in a base station. Referring to FIG. 5, a fifth UE in normal mode is pre-scheduled 501 for a packet transmission by allocating a fifth subset of radio resources to the fifth UE. The fifth UE is un-scheduled 502 by unallocating the pre-scheduled fifth subset of radio resources from the first UE, and the fifth subset of radio resources freed up from the un-scheduling is allocated 503 to one or more sixth UEs in survival mode. In other words, a normal mode UE, which is pre-scheduled for a packet transmission, is un-scheduled in order to prioritize scheduling of another UE in survival mode. The UE in normal mode may be pre-scheduled with semi-persistent scheduling, or dynamic scheduling of periodic traffic (i.e. the UE anticipating a packet each transfer interval).

FIG. 6 illustrates a flow chart according to another exemplary embodiment. The functions illustrated in FIG. 6 may be performed by an apparatus such as a UE. The UE may be, for example, in normal mode or in survival mode. Referring to FIG. 6, a request to be unallocated radio resources for a first time period, for example the next time period, is transmitted 601 to a base station. The request may be transmitted, or triggered, based at least partly on an application layer of the UE, a CQI associated with the UE, and/or other information. For example, the request to be unallocated may be transmitted, if the CQI exceeds a pre-defined threshold.

FIG. 7 illustrates a flow chart according to another exemplary embodiment. The functions illustrated in FIG. 7 may be performed by an apparatus such as a scheduler comprised in a base station. Referring to FIG. 7, a request to be unallocated for a first time period, for example the next time period, is received 701 from one or more UEs comprised in a plurality of UEs. Radio resources are allocated 702 to the plurality of UEs based at least partly on the request received from the one or more UEs. In other words, no radio resources are allocated to the one or more UEs that requested to be unallocated for the first time period. Instead, the radio resources are allocated to one or more other UEs in the plurality of UEs.

The functions and/or blocks described above by means of FIG. 3-7 are in no absolute chronological order, and some of them may be performed simultaneously or in an order differing from the described one. Other functions and/or blocks may also be executed between them or within them.

It should be noted that some exemplary embodiments are not limited to two modes, i.e. the normal mode and the survival mode. For example, in some exemplary embodiments, there may also be a third mode, which may be referred to as an intermediate mode, where a UE in survival mode has experienced more than one consecutive packet reception failures.

A technical advantage provided by some exemplary embodiments is that they may decrease the number of consecutive packet errors and improve the communication service availability. Furthermore, some exemplary embodiments may enable fulfilling the service availability requirements of URLLC and improve the performance of the URLLC system.

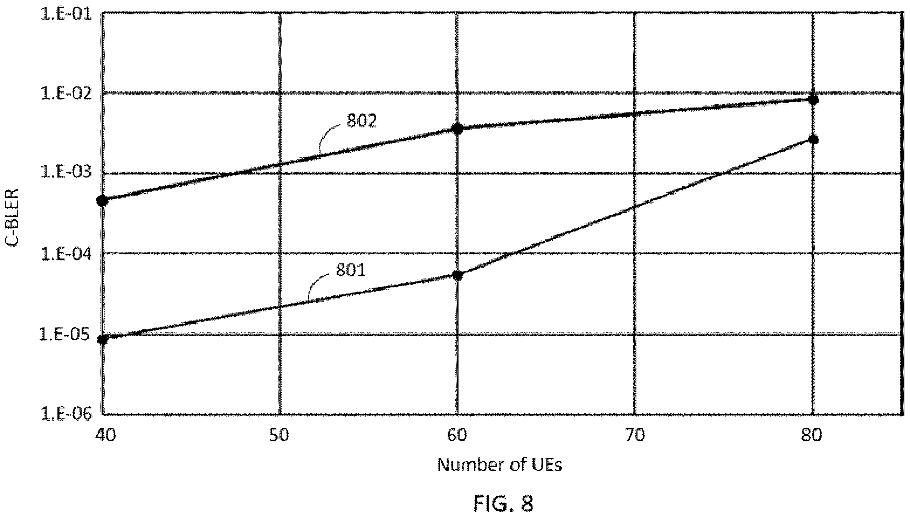

FIG. 8 and Table 2 below illustrate the benefits provided by some exemplary embodiments for improving the performance of URLLC service availability.

FIG. 8 illustrates simulated measurement results according to an exemplary embodiment. The simulations were performed in a factory setting with four base stations and frequency re-use 4. A 400-bit packet is sent with 0.5 ms interval to the UEs, which have a velocity of 22 m/s with random directions. The vertical axis in FIG. 8 indicates the probability of errors for two consecutive packets, i.e. consecutive block error rate (C-BLER). The horizontal axis in FIG. 8 indicates the number of UEs in the factory. Two curves are plotted for different scheduler implementations. The results shown with the lower curve 801 are obtained by applying an exemplary embodiment: survival mode UEs are allocated first before normal mode UEs, and the UEs are ordered based on CQI. For the upper curve 802, the order of UEs for resource allocation is selected randomly not taking into account user mode or CQI.

Table 2 below depicts BLER and C-BLER probabilities for the cases with 0, 1 and 3 UEs unallocated. The simulation results depicted in Table 2 indicate the benefits of an exemplary embodiment that de-prioritizes UEs with a higher CQI in order to serve UEs with a weaker CQI. Similar to FIG. 8, the simulations in Table 2 were performed in a factory setting with four base stations, frequency re-use 4, and a 400-bit packet sent with 0.5 ms interval to 40 UEs, which have a velocity of 0 - 10 m/s with random distribution. The numerical results in Table 2 are given for the block error rate (BLER) and for C-BLER. The BLER and C-BLER are shown for three situations in Table 2 in the row "Number of unallocated UEs". The "0" in that row means that all UEs were scheduled. The "1" and "3" in that row mean that, for a given allocation event, 1 or 3 UEs, respectively, were forced to remain with resources. These UEs had the highest CQI (averaged over PRBs) for that allocation event. It can be seen from Table 2 that the BLER increases to 0.025 and 0.075, when the number of unallocated UEs is 1 and 3, respectively. However, the C-BLER decreases or remains almost unchanged.

**Table 2.**

| Number of unallocated UEs | 0 | 1 | 3 |
|---|---|---|---|
| BLER | 1.6 E-4 | 0.025 | 0.075 |
| C-BLER | 8.2 E-6 | 6.0 E-6 | 3.8 E-6 |

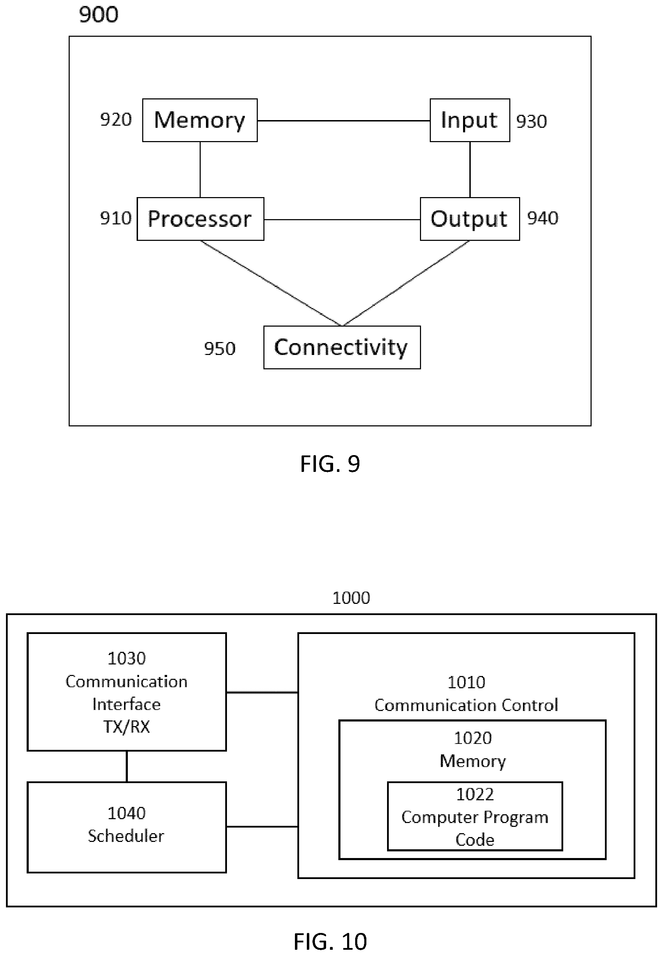

FIG. 9 illustrates an apparatus 900, which may be an apparatus such as, or comprised in, a terminal device, according to an exemplary embodiment. A terminal device may also be referred to as a UE or user equipment herein. The apparatus 900 comprises a processor 910. The processor 910 interprets computer program instructions and processes data. The processor 910 may comprise one or more programmable processors. The processor 910 may comprise programmable hardware with embedded firmware and may, alternatively or additionally, comprise one or more application-specific integrated circuits (ASICs).

The processor 910 is coupled to a memory 920. The processor is configured to read and write data to and from the memory 920. The memory 920 may comprise one or more memory units. The memory units may be volatile or non-volatile. It is to be noted that in some exemplary embodiments there may be one or more units of non-volatile memory and one or more units of volatile memory or, alternatively, one or more units of non-volatile memory, or, alternatively, one or more units of volatile memory. Volatile memory may be for example random-access memory (RAM), dynamic random-access memory (DRAM) or synchronous dynamic random-access memory (SDRAM). Non-volatile memory may be for example read-only memory (ROM), programmable read-only memory (PROM), electronically erasable programmable read-only memory (EEPROM), flash memory, optical storage or magnetic storage. In general, memories may be referred to as non-transitory computer readable media. The memory 920 stores computer readable instructions that are executed by the processor 910. For example, non-volatile memory stores the computer readable instructions and the processor 910 executes the instructions using volatile memory for temporary storage of data and/or instructions.

The computer readable instructions may have been pre-stored to the memory 920 or, alternatively or additionally, they may be received, by the apparatus, via an electromagnetic carrier signal and/or may be copied from a physical entity such as a computer program product. Execution of the computer readable instructions causes the apparatus 900 to perform one or more of the functionalities described above.

In the context of this document, a "memory" or "computer-readable media" or "computer-readable medium" may be any non-transitory media or medium or means that can contain, store, communicate, propagate or transport the instructions for use by or in connection with an instruction execution system, apparatus, or device, such as a computer.

The apparatus 900 may further comprise, or be connected to, an input unit 930. The input unit 930 may comprise one or more interfaces for receiving input. The one or more interfaces may comprise for example one or more temperature, motion and/or orientation sensors, one or more cameras, one or more accelerometers, one or more microphones, one or more buttons and/or one or more touch detection units. Further, the input unit 930 may comprise an interface to which external devices may connect to.

The apparatus 900 may also comprise an output unit 940. The output unit may comprise or be connected to one or more displays capable of rendering visual content, such as a light emitting diode (LED) display, a liquid crystal display (LCD) and/or a liquid crystal on silicon (LCoS) display. The output unit 940 may further comprise one or more audio outputs. The one or more audio outputs may be for example loudspeakers.

The apparatus 900 further comprises a connectivity unit 950. The connectivity unit 950 enables wireless connectivity to one or more external devices. The connectivity unit 950 comprises at least one transmitter and at least one receiver that may be integrated to the apparatus 900 or that the apparatus 900 may be connected to. The at least one transmitter comprises at least one transmission antenna, and the at least one receiver comprises at least one receiving antenna. The connectivity unit 950 may comprise an integrated circuit or a set of integrated circuits that provide the wireless communication capability for the apparatus 900. Alternatively, the wireless connectivity may be a hardwired application-specific integrated circuit (ASIC). The connectivity unit 950 may comprise one or more components such as a power amplifier, digital front end (DFE), analog-to-digital converter (ADC), digital-to-analog converter (DAC), frequency converter, (de)modulator, and/or encoder/decoder circuitries, controlled by the corresponding controlling units.

It is to be noted that the apparatus 900 may further comprise various components not illustrated in FIG. 9. The various components may be hardware components and/or software components.

The apparatus 1000 of FIG. 10 illustrates an exemplary embodiment of an apparatus such as, or comprised in, a base station such as a gNB. The apparatus may comprise, for example, a circuitry or a chipset applicable to a base station to realize some of the described exemplary embodiments. The apparatus 1000 may be an electronic device comprising one or more electronic circuitries. The apparatus 1000 may comprise a communication control circuitry 1010 such as at least one processor, and at least one memory 1020 including a computer program code (software) 1022 wherein the at least one memory and the computer program code (software) 1022 are configured, with the at least one processor, to cause the apparatus 1000 to carry out some of the exemplary embodiments described above.

The memory 1020 may be implemented using any suitable data storage technology, such as semiconductor-based memory devices, flash memory, magnetic memory devices and systems, optical memory devices and systems, fixed memory and/or removable memory. The memory may comprise a configuration database for storing configuration data. For example, the configuration database may store a current neighbour cell list, and, in some exemplary embodiments, structures of the frames used in the detected neighbour cells.

The apparatus 1000 may further comprise a communication interface 1030 comprising hardware and/or software for realizing communication connectivity according to one or more communication protocols. The communication interface 1030 comprises at least one transmitter (TX) and at least one receiver (RX) that may be integrated to the apparatus 1000 or that the apparatus 1000 may be connected to. The communication interface 1030 provides the apparatus with radio communication capabilities to communicate in the cellular communication system. The communication interface may, for example, provide a radio interface to terminal devices. The apparatus 1000 may further comprise another interface towards a core network such as the network coordinator apparatus and/or to the access nodes of the cellular communication system. The apparatus 1000 may further comprise a scheduler 1040 that is configured to allocate resources.

As used in this application, the term "circuitry" may refer to one or more or all of the following:
a. hardware-only circuit implementations (such as implementations in only analog and/or digital circuitry) and
b. combinations of hardware circuits and software, such as (as applicable):
   i. a combination of analog and/or digital hardware circuit(s) with software/firmware and
   ii. any portions of hardware processor(s) with software (including digital signal processor(s)), software, and memory(ies) that work together to cause an apparatus, such as a mobile phone, to perform various functions) and
c. hardware circuit(s) and or processor(s), such as a microprocessor(s) or a portion of a microprocessor(s), that requires software (for example firmware) for operation, but the software may not be present when it is not needed for operation.

This definition of circuitry applies to all uses of this term in this application, including in any claims. As a further example, as used in this application, the term circuitry also covers an implementation of merely a hardware circuit or processor (or multiple processors) or portion of a hardware circuit or processor and its (or their) accompanying software and/or firmware. The term circuitry also covers, for example and if applicable to the particular claim element, a baseband integrated circuit or processor integrated circuit for a mobile device or a similar integrated circuit in server, a cellular network device, or other computing or network device.

The techniques and methods described herein may be implemented by various means. For example, these techniques may be implemented in hardware (one or more devices), firmware (one or more devices), software (one or more modules), or combinations thereof. For a hardware implementation, the apparatus(es) of exemplary embodiments may be implemented within one or more application-specific integrated circuits (ASICs), digital signal processors (DSPs), digital signal processing devices (DSPDs), programmable logic devices (PLDs), field programmable gate arrays (FPGAs), graphics processing units (GPUs), processors, controllers, micro-controllers, microprocessors, other electronic units designed to perform the functions described herein, or a combination thereof. For firmware or software, the implementation can be carried out through modules of at least one chipset (for example procedures, functions, and so on) that perform the functions described herein. The software codes may be stored in a memory unit and executed by processors. The memory unit may be implemented within the processor or externally to the processor. In the latter case, it can be communicatively coupled to the processor via various means, as is known in the art. Additionally, the components of the systems described herein may be rearranged and/or complemented by additional components in order to facilitate the achievements of the various aspects, etc., described with regard thereto, and they are not limited to the precise configurations set forth in the given figures, as will be appreciated by one skilled in the art.

It will be obvious to a person skilled in the art that, as technology advances, the inventive concept may be implemented in various ways. The embodiments are not limited to the exemplary embodiments described above, but may vary within the scope of the claims. Therefore, all words and expressions should be interpreted broadly, and they are intended to illustrate, not to restrict, the exemplary embodiments.

## Claims

1. An apparatus comprising at least one processor, and at least one memory including computer program code, wherein the at least one memory and the computer program code are configured, with the at least one processor, to cause the apparatus to:
obtain information indicating at least a mode of a plurality of terminal devices and an amount of remaining survival time associated with at least a subset of the plurality of terminal devices, wherein the at least subset of the plurality of terminal devices are in a survival mode; and
allocate a set of radio resources to the plurality of terminal devices based at least partly on the mode of the plurality of terminal devices and the amount of remaining survival time associated with the at least subset of the plurality of terminal devices, wherein the set of radio resources is allocated to prioritize the at least subset of the plurality of terminal devices in the survival mode over terminal devices in a normal mode.

2. An apparatus according to claim 1, wherein the information further indicates at least a channel quality indicator associated with the plurality of terminal devices; and
wherein the set of radio resources is allocated to the plurality of terminal devices based further, at least partly, on the channel quality indicator associated with the plurality of terminal devices.

3. An apparatus according to any preceding claim, wherein the plurality of terminal devices comprises at least a first terminal device in the survival mode and a second terminal device in the normal mode; and
wherein a first subset of radio resources from the set of radio resources is allocated to the first terminal device in the survival mode before allocating a second subset of radio resources from the set of radio resources to the second terminal device in the normal mode.

4. An apparatus according to claim 3, wherein the plurality of terminal devices further comprises at least a third terminal device in the survival mode;
wherein the first subset of radio resources from the set of radio resources is allocated to the first terminal device in the survival mode before allocating a third subset of radio resources from the set of radio resources to the third terminal device in the survival mode; and
wherein the first terminal device in the survival mode is associated with a lower channel quality indicator than the third terminal device in the survival mode.

5. An apparatus according to claim 4, wherein the first terminal device in the survival mode is associated with an equal or lower amount of remaining survival time than the third terminal device in the survival mode.

6. An apparatus according to any of claims 3-5, wherein the plurality of terminal devices further comprises at least a fourth terminal device in the normal mode;
wherein the second subset of radio resources from the set of radio resources is allocated to the second terminal device in the normal mode before allocating a fourth subset of radio resources from the set of radio resources to the fourth terminal device in the normal mode; and
wherein the second terminal device in the normal mode is associated with a lower channel quality indicator than the fourth terminal device in the normal mode.

7. An apparatus according to any of claims 3-6, wherein the plurality of terminal devices further comprises at least a fifth terminal device in the normal mode and a sixth terminal device in the survival mode;
wherein the apparatus is further caused to:
pre-schedule the fifth terminal device in the normal mode for a packet transmission by allocating a fifth subset of radio resources from the set of radio resources to the fifth terminal device;
un-schedule the fifth terminal device by unallocating the fifth subset of radio resources from the fifth terminal device; and
allocate the fifth subset of radio resources to the sixth terminal device in the survival mode.

8. An apparatus according to any preceding claim, wherein the apparatus is further caused to:
receive, from one or more terminal devices of the plurality of terminal devices, a request to be unallocated for a first time period;
wherein the set of radio resources is allocated to the plurality of terminal devices based further, at least partly, on the request received from the one or more terminal devices.

9. A method comprising:
obtaining information indicating at least a mode of a plurality of terminal devices and an amount of remaining survival time associated with at least a subset of the plurality of terminal devices, wherein the at least subset of the plurality of terminal devices are in a survival mode; and
allocating a set of radio resources to the plurality of terminal devices based at least partly on the mode of the plurality of terminal devices and the amount of remaining survival time associated with the at least subset of the plurality of terminal devices, wherein the set of radio resources is allocated to prioritize the at least subset of the plurality of terminal devices in the survival mode over terminal devices in a normal mode.

10. A method according to claim 9, wherein the information further indicates at least a channel quality indicator associated with the plurality of terminal devices; and
wherein the set of radio resources is allocated to the plurality of terminal devices based further, at least partly, on the channel quality indicator associated with the plurality of terminal devices.

11. A method according to claim 9 or 10, wherein the plurality of terminal devices comprises at least a first terminal device in the survival mode and a second terminal device in the normal mode; and
wherein a first subset of radio resources from the set of radio resources is allocated to the first terminal device in the survival mode before allocating a second subset of radio resources from the set of radio resources to the second terminal device in the normal mode.

12. A method according to claim 11, wherein the plurality of terminal devices further comprises at least a third terminal device in the survival mode;
wherein the first subset of radio resources from the set of radio resources is allocated to the first terminal device in the survival mode before allocating a third subset of radio resources from the set of radio resources to the third terminal device in the survival mode; and
wherein the first terminal device in the survival mode is associated with a lower channel quality indicator than the third terminal device in the survival mode.

13. A method according to claim 12, wherein the first terminal device in the survival mode is associated with an equal or lower amount of remaining survival time than the third terminal device in the survival mode.

14. A computer program comprising instructions for causing an apparatus to perform at least the following:
obtain information indicating at least a mode of a plurality of terminal devices and an amount of remaining survival time associated with at least a subset of the plurality of terminal devices, wherein the at least subset of the plurality of terminal devices are in a survival mode; and
allocate a set of radio resources to the plurality of terminal devices based at least partly on the mode of the plurality of terminal devices and the amount of remaining survival time associated with the at least subset of the plurality of terminal devices, wherein the set of radio resources is allocated to prioritize the at least subset of the plurality of terminal devices in the survival mode over terminal devices in a normal mode.

15. A system comprising at least a base station and a plurality of terminal devices;
wherein the base station is configured to:
obtain, from the plurality of terminal devices, information indicating at least a mode of the plurality of terminal devices and an amount of remaining survival time associated with at least a subset of the plurality of terminal devices, wherein the at least subset of the plurality of terminal devices are in a survival mode; and
allocate a set of radio resources to the plurality of terminal devices based at least partly on the mode of the plurality of terminal devices and the amount of remaining survival time associated with the at least subset of the plurality of terminal devices, wherein the set of radio resources is allocated to prioritize the at least subset of the plurality of terminal devices in the survival mode over terminal devices in a normal mode.
